# Europäisches Patentamt

# European Patent Office

# Office européen des brevets

(11) Veröffentlichungsnummer: **0 113 799**
**B1**

(12) **EUROPÄISCHE PATENTSCHRIFT**

(51) Int. Cl.⁴: **C 08 G 63/20,** C 08 G 63/48,
C 08 G 63/76, C 08 G 63/66,
C 09 D 3/64

(45) Veröffentlichungstag der Patentschrift:
**10.12.86**

(21) Anmeldenummer: **83107192.3**

(22) Anmeldetag: **22.07.83**

(54) Emulgator- u. lösungsmittelfreie Alkydharzwasserlacke.

(30) Priorität: **16.12.82 DE 3246614**

(43) Veröffentlichungstag der Anmeldung:
**25.07.84 Patentblatt 84/30**

(45) Bekanntmachung des Hinweises auf die Patenterteilung:
**10.12.86 Patentblatt 86/50**

(84) Benannte Vertragsstaaten:
**AT BE CH DE FR GB IT LI NL SE**

(56) Entgegenhaltungen:
**DE - A - 2 815 096**
**GB - A - 1 075 081**
**GB - A - 2 033 400**
**US - A - 4 081 411**

(73) Patentinhaber: **Henkel Kommanditgesellschaft auf Aktien, Postfach 1100 Henkelstrasse 67,
D-4000 Düsseldorf-Holthausen (DE)**

(72) Erfinder: **Gorzinski, Manfred, Bogenstrasse 6,
D-4000 Düsseldorf (DE)**
Erfinder: **Wilk, Hans-Christoph, Dr., An der Obererft 94,
D-4040 Neuss (DE)**
Erfinder: **Fischer, Herbert, Dr., Am Nettchesfeld 14,
D-4000 Düsseldorf 13 (DE)**
Erfinder: **Wegemund, Bernd, Dr., Händelweg 3,
D-5657 Haan (DE)**

## Beschreibung

Die Erfindung liegt auf dem Gebiet der Alkydharzwasserlacke. Sie betrifft ein Verfahren zur Herstellung eines ofentrocknenden Alkydharzes, welches sich ohne Zuhilfenahme von Hilfslösungsmitteln oder Emulgatoren zu Wasserlacken verarbeiten lässt sowie die Herstellung derartiger wässriger Zubereitungen.

Zur Herstellung von Wasserlacken aus Alkydharzen sind zahlreiche Verfahren bekannt, welche sich im wesentlichen in 2 Arbeitsweisen einteilen lassen. So können Alkydharze unter Verwendung von Emulgatoren oder hydrophilen Harzen (Emulgatorharzen) zu wässrigen Dispersionen verarbeitet werden. Derartige Dispersionen enthalten im allgemeinen keine Hilfslösungsmittel. Sie zeigen jedoch den Nachteil zu geringer Wasserfestigkeit, d. h. auch nach dem Trocknen des Lackes, z.B. durch Einbrennen neigt der Lackfilm zum Redispergieren. In den meisten Fällen sind auch keine hochglänzenden Lackfilme herstellbar.

Die zweite Arbeitsweise zur Herstellung von Alkydharzwasserlacken besteht darin, Alkydharze nach Neutralisation zu lösen. In den meisten Fällen werden hierzu beträchtliche Mengen organischer Lösungsmittel mitverwendet, so dass der Hauptvorteil der Wasserlacke, nämlich die Umweltfreundlichkeit in Frage gestellt ist.

So werden beispielsweise in der Deutschen Offenlegungsschrift 2815096 Alkydharze für Wasserlacke vorgeschlagen, die nach einem 2-stufigen Kondensationsverfahren hergestellt worden sind und Säurezahlen zwischen 20 und 80 aufweisen sollen. Diese Harze sind, wenn sie einen Säurewert von mindestens etwa 25 haben, bei Zugabe eines partiell oder vollständig wassermischbaren organischen Lösungsmittels und Neutralisation mit einer Base löslich. Ein ähnliches lösungsmittelhaltiges Wasserlacksystem ist Gegenstand des Britischen Patents 1075081. Hier liegt die Säurezahl zwischen 25 und 60.

Eine weitere Möglichkeit Alkydharzwasserlacke herzustellen, ist Gegenstand der Deutschen Patentschrift 2842919. Danach werden zunächst Alkydharze mit Säurezahlen zwischen 30 und 180 mg KOH/g hergestellt und danach durch Einwirken von Glycid bis zu einer Säurezahl zwischen 5 und 35, insbesondere zwischen 15 und 30 verestert. Die so hergestellten Harze, welche 2,3-Dihydroxypropylgruppen aufweisen, werden sodann mit schwer flüchtigen Aminoalkoholen neutralisiert und unter Zuhilfenahme von Emulgatoren, welche beim Einbrennen ihre Hydrophilie verlieren, zu Wasserlacken konfektioniert. Eine spezielle Variante dieser Arbeitsweise ist in der Deutschen Offenlegungsschrift 2922370 beschrieben. Danach können Harze, welche 2,3-Dihydroxypropylgruppen aufweisen, auch durch Einwirken von Glycerin auf Alkydharze mit hoher Säurezahl hergestellt werden.

Harze mit 2,3-Dihydroxypropylgruppen haben somit den Vorteil, dass sie ohne Zuhilfenahme flüchtiger Bestandteile, wie Lösungsmittel oder auch flüchtiger Amine, zu Wasserlacken konfektioniert werden können. Es müssen jedoch weiterhin Emulgatoren verwendet werden. Hierzu sind zwar solche Emulgatoren vorgeschlagen worden, die beim Einbrennen ihre Hydrophilie verlieren, und zwar einerseits thermoreaktive Emulgatoren, die bei erhöhten Temperaturen in Bruchstücke gespalten werden, andererseits solche Emulgatoren, die Hydroxylgruppen in das Harz miteingebrannt werden. Beide Arten von Emulgatoren können zu Störungen des Lackfilms beitragen. Sei es, dass beim Einbrennen durch chemische Reaktion Vergilbung eintritt, Bruchstücke ausschwitzen, Bruchstücke sich an der Grenzfläche zum lackierten Substrat ansammeln und damit die Haftung verschlechtern oder aber, dass durch die Anwesenheit zahlreicher Hydroxylgruppen unter Einbrennbedingungen zu enge Vernetzung und damit Versprödung auftritt. So zeigen insbesondere die Glycerin modifizierten Harze den Nachteil einer sehr geringen Verarbeitungstoleranz, worunter zu verstehen ist, dass nur bei einer ganz speziellen Auswahl der Einbrennbedingungen Überzüge zu erreichen sind, die sowohl ausreichende Härte wie auch ausreichende Flexibilität aufweisen. Bei der technischen Verarbeitung in Lackierstrassen lassen sich jedoch die Einbrennbedingungen oftmals nicht so genau konstant halten.

Auf der anderen Seite ist der Rohstoff Glycid (2,3-Epoxypropanol) schwer zu handhaben. Es besteht somit ein Bedarf nach neuen Alkydharzen, die nach einem Verfahren hergestellt werden, welches die Mitverwendung von Glycid erübrigt und die ohne Zuhilfenahme von organischen Lösungsmitteln oder Emulgatoren zu Wasserlacken konfektioniert werden können.

Schliesslich sind aus dem Deutschen Patent 2845539 spezielle Aminoalkohole bekannt, die sich als solubilisierende Neutralisationsmittel für Wasserlacke eignen. Aus der Lehre dieses Patents ist jedoch nicht zu entnehmen, dass und wie mit derartigen Neutralisationsmitteln emulgator- und lösungsmittelfreie Alkydharze hergestellt werden können.

Aufgabe der Erfindung ist somit in einer ersten Ausführungsform ein Verfahren zur Herstellung eines hydrophilen Alkydharzes mit Säurezahl <40, das sich zu lösungsmittel- und emulgatorfreien wässrigen Zubereitung konfektionieren lässt. Weiterhin ist es Aufgabe der Erfindung, Alkydharze bereitzustellen, die nur so hydrophil sind, dass sie unter Verwendung solubilisierender Aminoalkohole als Neutralisationsmittel gerade noch zu klaren, wässrigen Zubereitungen konfektionierbar sind, andererseits nach dem Einbrennen besonders wasserfeste Überzüge ergeben. Schliesslich ist es Aufgabe der Erfindung, wässrige Alkydharzlösungen bereitzustellen, die das Alkydharz und geeignete Aminoalkohole als Neutralisationsmittel enthalten.

Gegenstand der Erfindung ist somit ein Verfahren zur Herstellung wässriger Alkydharzzubereitungen durch Kondensation von Fettsäuren und mehrwertigen Carbonsäuren mit mehrfunktionellen Alkoholen in zwei Stufen bis zu einer Endsäurezahl zwischen 15 und 40 und anschliessendes Auflösen in Gegenwart von Aminen, dadurch gekennzeichnet, dass in einer ersten Stufe 8 bis 16 mol Schnitte gradkettiger oder verzweigter Fettsäuren mit 25 bis 45 mol Dihydroxyverbindungen und 14 bis 28 mol Trihydroxyverbindungen oder höher funktioneller Hydroxyverbindungen in an sich bekannter Weise bis zu einer Säurezahl von <5 kondensiert werden und in einer nachfolgenden Stufe 13 bis 25 mol Dicarbonsäuren und 8 bis 15 mol Tricarbonsäuren und/oder deren Anhydride zugegeben werden und kondensiert wird, bis die Endsäurezahl <40 ist, woraufhin in Abwesenheit von organischen Lösungsmitteln und Emulgatoren durch Zusatz von Aminoalkoholen mit mehr als 2 Hydroxylgruppen im Molekül in Wasser gelöst wird.

Das erfindungsgemässe Verfahren umfasst demzufolge drei Reaktionsstufen. In der ersten Reaktionsstufe werden Fettsäuren mit einem hohen Überschuss an Hydroxyverbindungen verkocht, bis praktisch keine freien Carboxylgruppen vorhanden sind. In der zweiten Reaktionsstufe werden durch Reaktion mit Di- und/oder Tricarbonsäuren Säuregruppen eingeführt und durch Kondensation das Harz hergestellt. Die dritte Reaktionsstufe ist die Neutralisation mit ausgewählten Aminoalkoholen.

In der ersten Reaktionsstufe werden 8–16 mol Schnitte gradkettiger oder verzweigter Fettsäuren mit 25–45 mol Dihydroxyverbindungen und 14–28 mol Trihydroxyverbindungen umgesetzt. Bevorzugt ist die Verwendung von 11–14 mol gradkettigen oder verzweigten Fettsäuren, zusammen mit 31–39 mol Dihydroxyverbindungen und 19–24 mol Trihydroxyverbindungen. Die Veresterung der Fettsäuren mit den mehrfunktionellen Hydroxyverbindungen findet unter üblichen Bedingungen statt. Verestert wird somit bei Temperaturen zwischen 100 und 250 °C. Diese Veresterung kann in Gegenwart eines inerten Lösungsmittels, wie z. B. Xylol, durchgeführt werden, welches mit dem Reaktionswasser ein Azeotrop bildet, so dass das Reaktionswasser ausgekreist wird. Nach einem bevorzugten Verfahren wird jedoch in Abwesenheit eines solchen Lösungsmittels, welches später aus dem Harz wieder entfernt werden müsste, verestert und das Reaktionswasser durch Durchleiten eines inerten Gases, wie z. B. Stickstoff oder Argon, entfernt. Übliche Veresterungskatalysatoren, wie z. B. Säuren, insbesondere 4-Toluolsulfonsäure, können gewünschtenfalls zugegen sein.

Zu Beginn der zweiten Reaktionsstufe werden 13–25 mol Dicarbonsäuren – vorzugsweise 17–22 mol Dicarbonsäuren – und 8–15 mol Tricarbonsäuren, vorzugsweise 10–13 mol Tricarbonsäuren zugegeben. Die Di- und Tricarbonsäuren können vorzugsweise auch durch Anhydride ersetzt werden. Die Zugabe der Dicarbonsäuren erfolgt bei der Reaktionstemperatur der ersten Stufe. Verwendet man jedoch die Anhydride, so ist es bevorzugt, diese bei einer Temperatur zwischen 100 und 150 °C zuzugeben. Es wird sodann unter den bei der ersten Reaktionsstufe eingehaltenen Bedingungen verestert, bis die Säurezahl unter 40 gefallen ist. Es ist bevorzugt, Harze mit Säurezahlen zwischen 15 und 40, insbesondere zwischen 20 und 30 herzustellen. Besonders günstige Eigenschaften zeigen Harze mit Säurezahlen zwischen 20 und 25.

Nach Erreichen der Säurezahl werden die Harze abgekühlt und mit der molaren Menge Aminoalkohol oder aber mit einem Überschuss bis zu 20 mol-% zur Neutralisation versetzt. Um bei Raumtemperatur schüttbare Zubereitungen zu erhalten, empfiehlt es sich, wässrige Lösungen herzustellen. Nach einer bevorzugten Ausführungsform werden wässrige Lösungen mit 70–85 Gew.-% Feststoff hergestellt. Derartige hochprozentige wässrige Harzlösungen sind über viele Monate lagerstabil. Sie sind für das Auge klar und können mit Wasser beliebig weiter verdünnt werden, wenn sie mit solubilisierenden Aminoalkoholen neutralisiert worden sind.

Alkydharze mit besonders günstigen Eigenschaften, die auch bei Säurezahlen unter 20 nicht vergelen, werden besonders dann erhalten, wenn innerhalb der angegebenen Grenzen bei den Rohstoffen auf ein mol-Verhältnis von Carboxyl-:Hydroxylgruppen zwischen 1:1,4 und 1:1,8, vorzugsweise jedoch zwischen 1:1,5 und 1:1,7 geachtet wird.

Zur Durchführung des erfindungsgemässen Verfahrens werden in der ersten Reaktionsstufe Fettsäuren eingesetzt. Im Gegensatz zu den Mengenverhältnissen der Ausgangsstoffe ist die Art der Fettsäuren wenig kritisch. So können natürliche oder synthetische Fettsäuren verwendet werden, ungesättigte wie auch gesättigte, reine Säuren oder Schnitte. Bevorzugt ist zum einen die Verwendung verzweigter Fettsäuren, wie Isononansäure, Isopalmitinsäure, Isostearinsäure; zum anderen die Verwendung von Schnitten natürlicher Fettsäuren, insbesondere solche, die aus den folgenden Ölen hergestellt worden sind: Kokosöl, Talg, Sojaöl, Sonnenblumenöl, Erdnussöl, Ricinusöl, Fischöl, Leinöl, Rapsöl, Palmöl oder Palmkernöl. Werden Fettsäureschnitte mit einem hohen Anteil an $C_{18}$-Fettsäuren verwendet, so sind die erhaltenen Lacke flexibler als bei kurzkettigen ($C_{12}$)-Fettsäuren. Eine Flexibilisierung ist jedoch auch durch andere Massnahmen zu erreichen, so z. B. durch Verwendung von Polyolen mit mehr als 6 Atomen zwischen den OH-Gruppen.

Als Dihydroxiverbindungen können nach dem erfindungsgemässen Verfahren eine grosse Anzahl technisch zugänglicher Glykole verwendet werden. Beispiele sind Ethylenglykol, Diethylenglykol usw., Propylenglykol, Neopentylglykol, Butandiol, Hexandiol. Nach einer bevorzugten Ausgestaltung des Verfahrens werden solche Dihydroxyverbindungen eingesetzt, die unter Kondensationsbedingungen nicht flüchtig sind. Hierzu zählen neben dem Neopentylglykol auch die Ringöffnungsprodukte von 1,2-Epoxyalkanen, wie z. B. 1,2-Dihydroxioctan.

Zur Herstellung der erfindungsgemässen Harze eignen sich weiterhin die dem Alkydharz-Fachmann bekannten Triole. Es sind dies in erster Linie Glycerin, Trimethylolethan oder Trimethylolpropan. Nach einer besonders bevorzugten Ausführungsform jedoch wird das erfindungsgemässe Verfahren unter zumindest teilweisem Austausch der genannten Triole gegen deren Umsetzungsprodukte mit Ethylenoxid, Propylenoxid, Butanoxid oder Isobutenoxid im mol-Verhältnis 1:3 bis 1:40 durchgeführt. Weiterhin können die Triole gegen das Umsetzungsprodukt von Pentaerythrit mit Ethylenoxid, Propylenoxid, Butenoxid oder Isobutenoxid im mol-Verhältnis 1:3 bis 1:40 ausgetauscht werden, wenn darauf geachtet wird, dass die Anzahl der Hydroxylgruppen konstant bleibt.

Nach einer weiteren bevorzugten Ausführungsform der Erfindung wird das Verfahren so durchgeführt, dass die Trihydroxyverbindungen zumindest anteilmässig unter Konstanthalten der Anzahl an OH-Gruppen ersetzt werden durch Umsetzungsprodukte von epoxidierten Fettsäureestern und/oder Amiden und/oder epoxidierten Fettalkoholen mit Alkoholen oder Phenolen. Besonders geeignete Rohstoffe sind die Umsetzungsprodukte von epoxidierten Triglyceriden mit Glykolen, die Ringöffnungs- und Umesterungsprodukten epoxidierter Fettsäurealkylester mit Glykolen und/oder Triolen sowie die Ringöffnungsprodukte epoxidierter Fettalkohole mit Glykolen und/oder Triolen. Es sei hier verwiesen auf die EP-A-113797.

Als Dicarbonsäuren sind aromatische Dicarbonsäuren bevorzugt, insbesondere Phthalsäure, Isophthalsäure, Terephthalsäure, wobei Phthalsäure besonders bevorzugt als Anhydrid eingesetzt wird. Weiterhin geeignet sind auch aliphatische Dicarbonsäuren, wie Adipinsäure, Maleinsäure, Maleinsäureanhydrid, Bernsteinsäure, Glutarsäure oder Sebacinsäure. Besonders bevorzugt sind cyclische aliphatische Dicarbonsäuren, wie z.B. Tetrahydrophthalsäure, welche ebenfalls als Anhydrid eingesetzt werden kann. Anstelle der Dicarbonsäuren oder deren Anhydride können auch deren Ester mit kurzkettigen aliphatischen Alkoholen, wie z.B. Methanol oder Ethanol sowie auch deren Halbester eingesetzt werden. So ist z.B. auch Dimethylterephthalat ein bevorzugter Rohstoff.

Als Tricarbonsäure ist Trimellitsäure bevorzugt, diese kann auch als Anhydrid oder Ester eingesetzt werden.

Zur Verbesserung der Wasserfestigkeit der eingebrannten Lacke sind die erfindungsgemässen Harze so hydrophob eingestellt, dass sie nur mit Hilfe solubilisierender Amine zu klaren Wasserlacken konfektioniert werden können. So sind z.B. durch Neutralisation mit Ammoniak – auch im Überschuss (pH >8) – keine Lösungen oder Dispersionen herstellbar. Das Harz sedimentiert klumpig. Eine genaue Beziehung zwischen der chemischen Struktur geeigneter Amine und der Solubilisierungswirkung wurde nicht gefunden, jedoch ist das Vorhandensein von 3 und mehr Hydroxylgruppen Voraussetzung. Von den Aminoalkoholen mit 3 und mehr Hydroxylgruppen zeigen primäre Aminoalkohole wie z.B. Trismethylolaminomethan nur mässige solubilisierende Wirkung. Nur bedingt geeignet sind weiterhin Triethanolamin sowie die Addukte von Ethylenoxid oder Propylenoxid an 2-Methyl-2-aminopropanol bzw. 2-Methyl-2-aminopropandiol. Mässige solubilisierende Wirkung zeigen weiterhin die primären, sekundären und tertiären Aminoalkohole, die durch Addition von Glycid an Ammoniak herstellbar sind. Auch Gemische dieser Substanzen sind nur mässig geeignet.

Überraschend wurde gefunden, dass die Umsetzungsprodukte von 2 mol Glycid mit 1 mol Monoalkylamin oder 1 mol Mono(hydroxyalkyl)-amin geeignete solubilisierende Neutralisationsmittel darstellen. Weitere geeignete solubilisierende Neutralisationsmittel sind die Umsetzungsprodukte von Di-(hydroxyalkyl)aminen mit 1 mol Glycid bzw. die Umsetzungsprodukte von Alkylhydroxyalkylaminen mit 1 mol Glycid. Unter diesen Verbindungen sind das Umsetzungsprodukt von tert.-Butylamin mit 2-Glycid oder auch das Umsetzungsprodukt von Bis-(2-hydroxypropyl)-amin mit 1 mol Glycid sowie das Umsetzungsprodukt von Diethanolamin mit 1 mol Glycid geeignet. Bevorzugte solubilisierende Aminoalkohole sind die Umsetzungsprodukte von Methylamin, Ethylamin, Propylamin, Butylamin, Pentylamin und Hexylamin mit 2 mol Glycid. Weitere besonders bevorzugte solubilisierende Aminoalkohole sind: 2-Methyl-2-aminopropanol-2-glycid, 2-Methyl-2-aminopropandiol-2-glycid sowie 2-Aminopropanol-2-glycid.

Zur Herstellung wässriger Harzzubereitungen werden die solubilisierenden Amine den Harzen in solchen Mengen zugesetzt, dass ein pH zwischen 6,5 und 8, vorzugsweise zwischen 7 und 7,5 sich einstellt. Hierzu werden stöchiometrische Mengen +/– 20 mol-% benötigt. Bei Verwendung der bevorzugten Neutralisationsmittel entstehen für das Auge klare Harzlösungen, die auf Spritzviskosität verdünnt werden können, ohne dass Phasentrennung eintritt.

Beispiele
Herstellung der Alkydharze

Die Kondensation erfolgte in einem beheizbaren Glasrundkolben, der mit Rührer und Wasserabscheider versehen war, unter Stickstoff. Das Reaktionswasser wurde durch eingeleiteten Stickstoff ausgetrieben oder alternativ über ein azeotrop siedendes Gemisch mit Xylol (5% Xylol bezogen auf Gesamtansatz) ausgekreist. Bei dieser Vorgehensweise wird das Lösungsmittel zum Ende der 2. Kondensationsstufe entfernt.

Rahmenrezeptur
1. Reaktionsstufe
   1,10 mol Fettsäure
   3,00 mol Dihydroxyverbindung
   1,83 mol Trihydroxyverbindung
   0,005 mol Toluol-4-sulfonsäure
   Stickstoff bzw. 100 ml Xylol
   Es wird so lange auf 150–200 °C erwärmt, bis 1,10 mol Wasser abgespalten worden sind (ca. 2–6 h). Dann wird auf ca. 100 °C abgekühlt.

**2. Reaktionsstufe**

Zum Reaktionsgemisch der 1. Stufe werden gegeben:

1,67 mol (247 g) Phthalsäureanhydrid

1,00 mol (192 g) Trimellithsäureanhydrid

Unter N$_2$ wird kondensiert, bis die Säurezahl zwischen 25 und 30 mg KOH/g beträgt. Hierzu werden etwa 3,3 mol Wasser abgespalten. Die Reaktionszeit beträgt um 4 h.

**3. Reaktionsstufe**

Das Harz wird mit der der Säurezahl entsprechenden Menge Amin versetzt, z.B. mit dem Addukt von 2 mol Glycid an 1 mol 2-Amino-2-methyl-propanol-1 in 50%iger wässriger Lösung.

4. Um schüttbare Harze zu erhalten, ist es günstig, mit Wasser auf 85% Festkörper einzustellen.

**Beispiel 1**

In der 1. Reaktionsstufe wurden eingesetzt:

170 g (1,1 mol) kurzkettige Fettsäure (2% Capronsäure, 60% Caprylsäure, 35% Caprinsäure, 3% Laurinsäure)

179 g (1,33 mol) Trimethylolpropan (TMP)

241 g (0,5 mol) Additionsprodukt von 6 mol Propylenoxid an 1 mol TMP

312 g (3,00 mol) Neopentylglycol

1 g (0,005 mol) Toluol-4-sulfonsäure

Die Reaktionszeit betrug 2 h.

Säurezahl nach 2. Reaktionsstufe 25,0.

Neutralisiert wurde mit 288 g einer 50%igen wässrigen Lösung des Adduktes von 2 mol Glycid an 1 mol 2-Amino-2-methylpropanol, dann verdünnt, ca. 1650 g wässrige Harzlösung mit 85% Feststoffanteil wurden erhalten.

**Beispiel 2**

Beispiel 1 wurde wiederholt, jedoch wurde als Fettsäure eingesetzt:

280 g (ca. 1,1 mol) konjugierte Fettsäure (2% Myristinsäure, 6% Palmitinsäure, 1% Stearinsäure, 31% Ölsäure, 60% Linolsäure, davon 45–52% konjugierte Diene)

Die Reaktionszeit betrug 3 h für die 1. Reaktionsstufe.

Säurezahl nach der 2. Reaktionsstufe 25,2.

Es wurde mit 290 g einer 50%igen wässrigen Lösung des Adduktes von 2 mol Glycid an 1 mol 2-Amino-2-methylpropanol neutralisiert, dann verdünnt.

Ca. 1800 g wässrige Harzlösung mit 85% Feststoffanteil wurden erhalten.

**Beispiel 3**

Beispiel 1 wurde wiederholt, jedoch wurde als Fettsäure eingesetzt:

180 g Nonansäure

Reaktionszeit 1. Stufe = 4 h.

Säurezahl nach 2. Stufe = 27,4.

Neutralisation: 292 g der Lösung aus Beispiel 1.

Ca. 1650 g wässrige, 85%ige Harzlösung wurden erhalten.

**Beispiel 4**

Wie 1, jedoch 180 g Isononansäure

Reaktionszeit 1. Stufe = 4,5 h.

Säurezahl nach 2. Stufe = 27,6.

Neutralisation: 296 g der Lösung aus Beispiel 1.

Ca. 1650 g wässrige, 85%ige Harzlösung wurden erhalten.

**Beispiel 5**

Wie 1, jedoch 285 g techn. Isopalmitinsäure (SZ 217)

Reaktionszeit 1. Stufe = 4,5 h.

Säurezahl nach 2. Stufe = 25,7.

Neutralisation: 294 g der Lösung aus Beispiel 1.

Ca. 1800 g wässrige, 85%ige Harzlösung wurden erhalten.

**Beispiel 6**

Wie 1, jedoch wurde Trimethylolpropan durch 127 g (1,33 mol) Glycerin (95%ig) ersetzt.

Reaktionszeit 1. Stufe = 2,5 h.

Säurezahl nach 2. Stufe = 27,1.

Neutralisation: 275 g Lösung aus Beispiel 1.

Ca. 1600 g 85%ige wässrige Harzlösung wurden erhalten.

**Beispiel 7**

Wie Beispiel 1, jedoch wurden als Triol ausschliesslich 245 g (1,83 mol) Trimethylolpropan (TMP) verwendet.

Reaktionszeit 1. Stufe = 2 h.

Säurezahl nach 2. Stufe = 29,9.

Neutralisation: 270 g Lösung aus Beispiel 1.

Ca. 1450 g 85%ige wässrige Harzlösung wurden erhalten.

**Beispiel 8**

Wie Beispiel 7, jedoch wurde TMP durch 170 g (1,83 mol) Glycerin, 99,5%ig, ersetzt.

Reaktionszeit 1. Stufe = 2,5 h.

Säurezahl nach 2. Stufe = 26,3.

Neutralisation: 218 g Lösung aus Beispiel 1.

Ca. 1300 g 85%ige wässrige Harzlösung wurden erhalten.

**Beispiel 9**

In Beispiel 1 wurde das Addukt von Propylenoxid an Trimethylolpropan in gleicher Menge ersetzt durch

240 g des Ringöffnungsproduktes eines epoxidierten Sojaöls mit einem Überschuss an Ethylenglycol (OH-Zahl: 311).

Reaktionszeit 1. Stufe = 3 h.

Säurezahl nach Stufe 2 = 23,8.

Neutralisation: 254 g Lösung nach Beispiel 1.

Ca. 1600 g 85%ige wässrige Harzlösung wurden erhalten.

**Beispiel 10**

Wie Beispiel 9, jedoch mit

240 g des Ringöffnungsproduktes eines epoxidierten Oleylalkohols (Jodzahl 96 vor Epoxidierung) mit einem Überschuss Ethylenglycol (OH-Zahl: 409).

Reaktionszeit 1. Stufe = 3 h.

Säurezahl nach Stufe 2 = 24,3.

Neutralisation: 260 g Lösung nach Beispiel 1.

Ca. 1600 g 85%ige wässrige Harzlösung wurden erhalten.

### Beispiel 11

Wie Beispiel 9, jedoch mit

240 g des Ringöffnungs- und Umesterungsproduktes von Epoxistearinsäuremethylester mit einem mehrfachen Überschuss Ethylenglycol (OH-Zahl: 392).

Reaktionszeit 1. Stufe = 3 h.

Säurezahl nach Stufe 2 = 28,0.

Neutralisation: 290 g Lösung aus Beispiel 1.

Ca. 1600 g 85%ige wässrige Harzlösung wurden erhalten.

### Vergleichsversuch

Es wurde ein fettsäuremodifiziertes, 2,3-Dihydroxypropylgruppen enthaltendes Alkydharz hergestellt. Die Kondensation erfolgte in einer heizbaren Veresterungsapparatur, in üblicher Weise unter Stickstoff. Die Komponenten für die erste Stufe wurden gemeinsam beziehungsweise schrittweise unter Zusatz von 4,00 kg Xylol bis zur gewünschten Säurezahl erhitzt.

Es wurden kondensiert:

6,16 kg fraktionierte Fettsäuren (Kettenlängenverteilung):

60 Gew.-% Caprylsäure

35 Gew.-% Caprinsäure

3 Gew.-% Laurinsäure

2 Gew.-% höhere Fettsäuren)

2,28 kg Glycerin

2,11 kg Trimethylolpropan

11,08 kg Neopentylglycol

9,88 kg Phthalsäureanhydrid

7,68 kg Trimellitsäureanhydrid

Reaktionszeit: 4 h.

Reaktionstemperatur: Maximal 190 °C.

Säurezahl: 71,8 (Produkt 1).

Es wurden 2,25 kg Wasser abgeschieden und das Xylol durch Destillation im Vakuum entfernt.

In einem zweiten Reaktionsschritt wurden zur Reaktion gebracht:

40,99 kg Alkydharz (Produkt 1, Säurezahl 71,8)

2,64 kg Glycid

1,20 kg einer 50%igen wässrigen Lösung Glycerylamin (Adduct aus 1 mol 2-Amino-2-methylpropanol und 2 mol Glycid)

Reaktionszeit: 90 min.

Reaktionstemperatur: Maximal 140 °C.

Säurezahl: 25,2.

Das Alkydharz gemäss Vergleichsversuch wurde in der Wärme mit 4,90 kg einer 50%igen wässrigen Lösung des Adduktes von 7,5 mol Glycid an 1 mol Nonylphenol als Hilfsemulgator und 9,20 kg einer 50%igen wässrigen Lösung des Adduktes von 2 mol Glycid an 1 mol 1-Amino-2-methylpropanol vermischt. Anschliessend wurden 2,06 kg Wasser zugegeben, so dass eine Alkydharzmikroemulsion mit 85% Feststoff entstand.

### Herstellung eines Weisslackes

Im Dissolver wude eine Mahlpaste hergestellt aus (Gewichtsteile):

50 Teile Alkydharz, 85%ig in Wasser

32 Teile deionisiertes Wasser

30 Teile Pigmentierhilfsmittel (9 Teile einer 30%igen, säuregruppentragenden niedermolekularen Acrylatdispersion (Primal I 94, Rohm & Haas Co.) und 1 Teil 2-Methyl-2-aminopropanol-2-glycid, 75%ig in Wasser)

183 Teile Titandioxid (Kronos Titan CL 310)

Aufgelackt wurde mit:

309 Teilen Alkydharz, 85%ig in Wasser

131 Teilen Melaminharz (Cymel 301, American Cyanamid Co.)

265 Teilen deionisiertem Wasser

Es wurden 1000 Teile Weisslack mit einem Alkydharz-Melaminharz-Verhältnis 7:3 und einer Pigmentvolumenkonzentration von ca. 11% erhalten.

Zur Prüfung der Filme wurden die Lacke auf Stahlbleche gespritzt und bei 160 °C eingebrannt. Die Trockenfilmdicke betrug 40–50 µm. Die erhaltenen Ergebnisse sind in der Tabelle aufgelistet.

### Tabelle

| Beispiel Nr. | Ein- brenn- dauer min | Film- dicke µm | Glanz 20° % | Pendel- härte (König) sec | Erich- sen- tiefung mm | Biege- test 3 mm |
|---|---|---|---|---|---|---|
| 1 | 15 | 50 | 80 | 125 | 7,3 | + |
| 2 | 25 | 40 | 77 | 94 | 8,6 | + |
| 3 | 20 | 45 | 77 | 109 | 7,8 | + |
| 4 | 15 | 45 | 82 | 163 | 7,8 | + |
| 5 | 30 | 40 | 74 | 122 | 6,1 | + |
| 6 | 15 | 40 | 89 | 177 | 5,5 | + |
| 7 | 10 | 40 | 84 | 125 | 8,3 | + |
| 8 | 15 | 40 | 83 | 190 | 5,2 | + |
| 9 | 20 | 45 | 81 | 128 | 7,1 | + |
| 10 | 15 | 40 | 83 | 134 | 7,0 | + |
| 11 | 15 | 40 | 81 | 115 | 6,8 | + |
| Vergleich | 10 | 45 | 80 | 60 | 8,4 | − |
| Vergleich | 15 | 45 | 86 | 151 | 3,1 | − |
| Vergleich | 20 | 45 | 81 | 196 | 2,7 | − |

### Patentansprüche

1. Verfahren zur Herstellung wässriger Alkydharzzubereitungen, bei dem in einer ersten Stufe Schnitte geradkettiger oder verzweigter Fettsäuren mit Dihydroxyverbindungen und Trihydroxyverbindungen oder höher funktioneller Hydroxyverbindungen bis zu einer Säurezahl kleiner 5 kondensiert werden und in einer nachfolgenden Stufe Dicarbonsäuren und Tricarbonsäuren oder deren Anhydride zugegeben werden und kondensiert wird, bis die Endsäurezahl kleiner 40 beträgt, dadurch gekennzeichnet, dass bei den Rohstoffen ein Molverhältnis von Carboxyl:Hydroxylgruppen zwischen 1:1,4 und 1:1,8 eingehalten wird, wobei in der ersten Stufe

8–16 mol Schnitte geradkettiger oder verzweigter Fettsäuren mit

25–45 mol Dihydroxyverbindungen und
14–28 mol Trihydroxyverbindungen oder höher funktionellen Hydroxyverbindungen eingesetzt werden und

in der zweiten Stufe
13–25 mol Dicarbonsäuren und
8–15 mol Tricarbonsäuren und/oder deren Anhydride bis zu einer Säurezahl kleiner 40 kondensiert werden,

woraufhin das fertige Harz in Abwesenheit von organischen Lösungsmitteln und Emulgatoren durch Zusatz von solubilisierenden Aminoalkoholen mit mehr als 3 Hydroxylgruppen im Molekül in Wasser gelöst wird.

2. Verfahren nach Anspruch 1, dadurch gekennzeichnet, dass als Reaktanten eingesetzt werden:
11–14 mol gradkettiger oder verzweigter Fettsäuren,
31–39 mol Dihydroxyverbindungen,
19–24 mol Trihydroxyverbindungen oder höher funktionelle Hydroxyverbindungen,
17–22 mol Dicarbonsäuren,
10–13 mol Tricarbonsäuren.

3. Verfahren nach den Ansprüchen 1 und 2, dadurch gekennzeichnet, dass Harze mit einer Endsäurezahl von 15–40 mg KOH/g, vorzugsweise von 20–30 mg KOH/g hergestellt werden.

4. Verfahren nach den Ansprüchen 1–3, dadurch gekennzeichnet, dass ohne Einbeziehung des Neutralisationsmittels mit einem Verhältnis von Carboxyl-:Hydroxylgruppen zwischen 1:1,5 und 1:1,7 gearbeitet wird.

5. Verfahren nach den Ansprüchen 1–4, dadurch gekennzeichnet, dass die verwendeten Hydroxyverbindungen zumindest teilweise Umsetzungsprodukte von Glycerin, Trimethylolpropan oder Pentaerythrit mit Ethylenoxid, Propylenoxid, Butenoxid oder Isobutenoxid im Molverhältnis 1:3 bis 1:40 sind.

6. Verfahren nach den Ansprüchen 1–4, dadurch gekennzeichnet, dass die verwendeten Hydroxyverbindungen zumindest teilweise Umsetzungsprodukte epoxidierter Fettalkohole oder epoxidierter Fettsäureester mit mehrfunktionellen Hydroxyverbindungen sind.

7. Verfahren nach den Ansprüchen 1–6, dadurch gekennzeichnet, dass zur Neutralisation Umsetzungsprodukte von Alkylaminen mit bis zu 6 C-Atomen und endständiger oder innenständiger Aminogruppe mit Glycid verwendet werden, insbesondere 2-Methyl-2-aminopropanol-2-glycid.

8. Verwendung der Verfahrensprodukte nach einem der Ansprüche 1–7 zur Herstellung von Wasserlacken.

## Claims

1. A process for the production of aqueous alkyd resin preparations in which, in a first step, cuts of straightchain or branched fatty acids with dihydroxy compounds and trihydroxy compounds or higher hydroxy compounds are condensed to an acid number below 5 and, in a following step, dicarboxylic acids and tricarboxylic acids or anhydrides thereof are added and condensation is continued to a final acid number below 40, characterized in that a molar ratio of carboxyl groups to hydroxyl groups of from 1:1.4 to 1:1.8 is maintained in the raw materials,
from 8 to 16 moles cuts of straight-chain or branched fatty acids with
from 25 to 45 moles dihydroxy compounds and
from 14 to 28 moles trihydroxy compounds or higher hydroxy compounds
being used in the first step and
from 13 to 25 moles dicarboxylic acids and
from 8 to 15 moles tricarboxylic acids and/or anhydrides thereof
being condensed to an acid number below 40 in the second step, after which the resin obtained is dissolved in water in the absence of organic solvents and emulsifiers by addition of solubilizing amino alcohols containing more than 3 hydroxyl groups in the molecule.

2. A process as claimed in claim 1, characterized in that
from 11 to 14 moles straight-chain or branched fatty acids,
from 31 to 39 moles dihydroxy compounds,
from 19 to 24 moles trihydroxy compounds or higher hydroxy compounds,
from 17 to 22 moles dicarboxylic acids and
from 10 to 13 moles tricarboxylic acids
are used as reactants.

3. A process as claimed in claims 1 and 2, characterized in that resins having a final acid number of from 15 to 40 mg KOH/g and preferably of from 20 to 30 mg KOH/g are produced.

4. A process as claimed in claims 1 to 3, characterized in that, not including the neutralizing agent, a ratio of carboxyl groups to hydroxyl groups of from 1:1.5 to 1:1.7 is used.

5. A process as claimed in claims 1 to 4, characterized in that the hydroxy compounds used are at least partly reaction products of glycerol, trimethylol propane or pentaerythritol with ethylene oxide, propylene oxide, butene oxide or isobutene oxide in a molar ratio of from 1:3 to 1:40.

6. A process as claimed in claims 1 to 4, characterized in that the hydroxy compounds used are at least partly reaction products of epoxidized fatty alcohols or epoxidized fatty acid esters with polyfunctional hydroxy compounds.

7. A process as claimed in claims 1 to 6, characterized in that reaction products of alkylamines containing up to 6 carbon atoms and a terminal or internal amino group with glycidol, more especially 2-methyl-2-aminopropanol-2-glycidol, are used for neutralization.

8. The use of the products obtained by the process claimed in any of claims 1 to 7 for the production of aqueous lacquers.

## Revendications

1. Procédé en vue d'obtenir des préparations aqueuses de résines alkydes, procédé dans lequel, au cours d'une première étape, on condense des fractions d'acides gras à chaîne droite ou ramifiée avec des composés dihydroxy et des composés trihydroxy ou des composés hydroxy d'une fonctionnalité supérieure jusqu'à un indice d'acide inférieur à 5 et, lors d'une étape ultérieure, on ajoute des acides dicarboxyliques et des acides tricarboxyliques ou leurs anhydrides et l'on condense jusqu'à ce que l'indice d'acide final soit inférieur à 40, caractérisé en ce que, dans le cas des matières brutes, on maintient un rapport molaire groupes carboxy/groupes hydroxy se situant entre 1:1,4 et 1:1,8 et, lors de la première étape, on utilise:

8–16 moles de fractions d'acides gras à chaîne droite ou ramifiée avec

25–45 moles de composés dihydroxy et

14–28 moles de composés trihydroxy ou de composés hydroxy d'une fonctionnalité supérieure et, lors de la deuxième étape, on condense:

13–25 moles d'acides dicarboxyliques et

8–15 moles d'acides tricarboxyliques et/ou de leurs anhydrides jusqu'à un indice d'acide inférieur à 40,

après quoi on dissout la résine préparée dans l'eau en absence d'émulsionnants et de solvants organiques par addition d'amino-alcools solubilisants comportant plus de trois groupes hydroxy dans la molécule.

2. Procédé selon la revendication 1, caractérisé en ce que, comme réactifs, on utilise:

11–14 moles d'acides gras à chaîne droite ou ramifiée,

31–39 moles de composés dihydroxy,

19–24 moles de composés trihydroxy ou de composés hydroxy d'une fonctionnalité supérieure,

17–22 moles d'acides dicarboxyliques,

10–13 moles d'acides tricarboxyliques.

3. Procédé selon les revendications 1 et 2, caractérisé en ce qu'on prépare des résines ayant un indice d'acide final de 15–40 mg de KOH/g, de préférence, de 20–30 mg de KOH/g.

4. Procédé selon les revendications 1–3, caractérisé en ce qu'on travaille sans faire intervenir l'agent de neutralisation avec un rapport groupes carboxy/groupes hydroxy se situant entre 1:1,5 et 1:1,7.

5. Procédé selon les revendications 1–4, caractérisé en ce que les composés hydroxy utilisés sont au moins partiellement des produits réactionnels de glycérine, de triméthylol-propane ou de pentaérythritol avec l'oxyde d'éthylène, l'oxyde de propylène, l'oxyde de butène ou l'oxyde d'isobutène dans le rapport molaire de 1:3 à 1:40.

6. Procédé selon les revendications 1–4, caractérisé en ce que les composés hydroxy utilisés sont au moins partiellement des produits réactionnels d'alcools gras époxydés ou d'esters d'acides gras époxydés avec des composés hydroxy polyfonctionnels.

7. Procédé selon les revendications 1–6, caractérisé en ce que, pour la neutralisation, on utilise des produits réactionnels d'alkylamines contenant jusqu'à 6 atomes de carbone et des groupes amino terminaux ou internes avec un glycide, en particulier, le 2-méthyl-2-aminopropanol-2-glycide.

8. Utilisation des produits du procédé selon une des revendications 1 à 7 pour la préparation de vernis à l'eau.